# EUROPEAN PATENT SPECIFICATION

(11) **EP 1 397 621 B1**
(45) Date of publication and mention of the grant of the patent: **11.01.2006**
(21) Application number: 02743626.0
(22) Date of filing: 03.06.2002
(51) Int. Cl.: F24J 2/10, F24J 2/14

(54) **A PARABOLIC SOLAR CONCENTRATOR MODULE**
PARABOLISCHES SONNENKONZENTRATORMODUL
CONCENTRATEUR SOLAIRE PARABOLIQUE

(30) Priority: 18.06.2001 IT RM20010350
(43) Date of publication of application: 17.03.2004
(73) Proprietor: ENEA - ENTE PER LE NUOVE TECNOLOGIE, L'ENERGIA E L'AMBIENTE, 00196 Roma (IT)
(72) Inventor: RUBBIA, Carlo, CH-1208 Genève (CH); VIGNOLINI, Mauro, I-00060 Santa Maria di Galeria (IT); PRISCHICH, Diego, Ettore, I-00060 Santa Maria di Galeria (IT); MELIOZZI, Adio, I-00060 Santa Maria di Galeria (IT); GIANNUZZI, Giuseppe, Mauro, I-00060 Santa Maria di Galeria (IT)
(74) Representative: Sarpi, Maurizio
(86) International application number: PCT/IT2002/000360
(87) International publication number: WO 2002/103256

(56) References cited:
- FR-A- 2 469 516
- US-A- 3 841 738
- US-A- 4 238 265
- US-A- 4 432 343
- US-A- 5 028 469
- US-A- 5 151 827

## Description

The present invention relates to the sector of the solar plants for the production of energy and particularly to a panel or module of cilindric parabolic collectors, with a honeycomb structure, apt to support thin mirrors, which concentrate the rays of sunlight on a tube, within which a fluid to be heated flows.

The present systems for concentration of the rays of sunlight are generally formed of curved glass mirrors having a 4mm thickness and cylindric-parabolic shape, with a 166cm spaced focus and a 576cm parabole span, which are supported by a reticular tube structure, which has a strength necessary for withstanding the deformation forces due to the wind action. The mirror is a self-supporting one and is secured to the underlying structure by means of supports glued thereto.

Even if this rectangular structure is sufficiently rigid and strong, it has, however, the drawback of being very heavy and requires very difficult assembling and alignment operations of the mirrors

Another drawback of the above said prior art consists in that said rigid mirrors, mounted on a reticular structure, need to be checked as to the convergence of the sunlight rays on the receiving tube, within which a fluid to be heated flows, an operation which causes high installation costs.

Said reflecting surfaces of the present plants are stable for a long time, from both the optical and mechanical points of view and can be easily cleaned, but in particular working conditions they tend to be fragile. In fact, in some cases the rupture stresses have been exceeded owing to the forces and vibrations caused by the wind and by the interactions with the support structures.

For these reasons the glass panels, arranged at the most exposed extremities of said structures, have been strengthened by glass fibers, for improving their mechanical characteristics. The present cost of the curved mirrors varies between 52 and 60 $/m², but in any case it should be considered as an additional cost for the assemblage and alignment of the mirrors in situ, which may be estimated in 60 $/m². The mirrors should have excellent optical proprieties and need support structures for allowing the movement of the sun; all this being extremely expensive and requiring an alternative system for reducing the costs of the collectors.

From document US-3,841,738 is known a reflective panel comprising a reflective material supported on a trough-like honeycomb panel.

The main object of the present invention is that to overcome the above said problems and drawbacks by a module or panel having a parabolic shape with a honeycomb structure for supporting thin glass mirrors, apt to concentrate the rays of sunlight on a tube, in which a fluid flows, which is heated by solar energy at a temperature suitable to be used for the production of solar energy. Preferably, the module is supported by a tubular element extending longitudinally, so as to support the panel honeycomb structure by means of suitable transverse fins and/or ribs.

This and other objects of the invention will be better understood from the following disclosure with reference to the enclosed drawings, which show by way of example two preferred embodiments of the present invention.

In the drawings:
figure 1 schematically shows the structure of a panel according to the invention;
figure 2 shows the parabolic transverse profile of the panel;
figure 4 is a perspective view, which schematically represents a first embodiment of the invention, in which the panels with a honeycomb structure have a variable thickness;

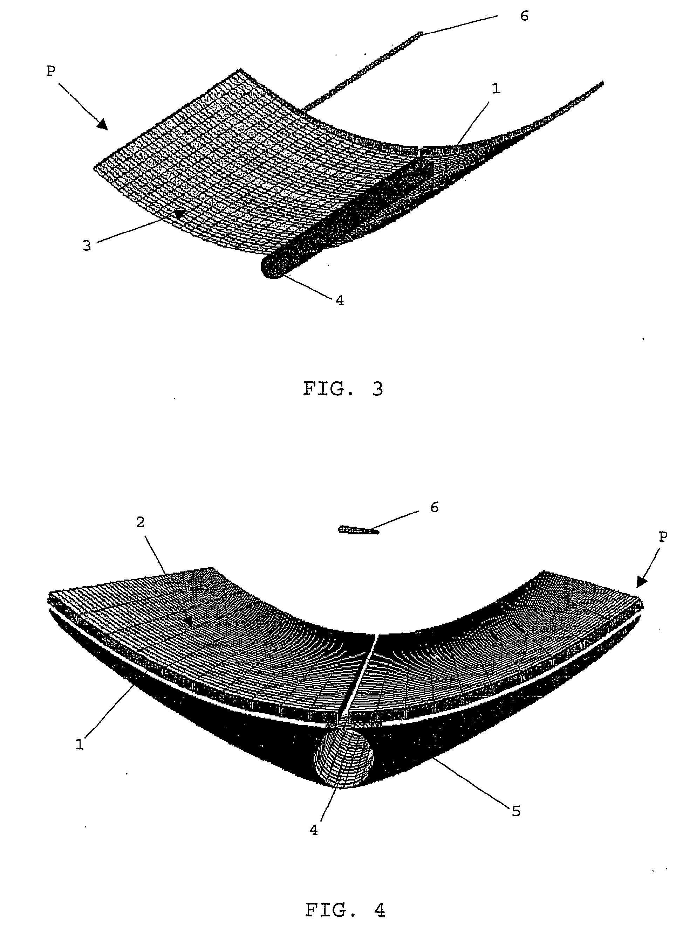

figure 4, similar to the previous one, shows a second embodiment of the invention, in which the honeycomb panels have a constant thickness;

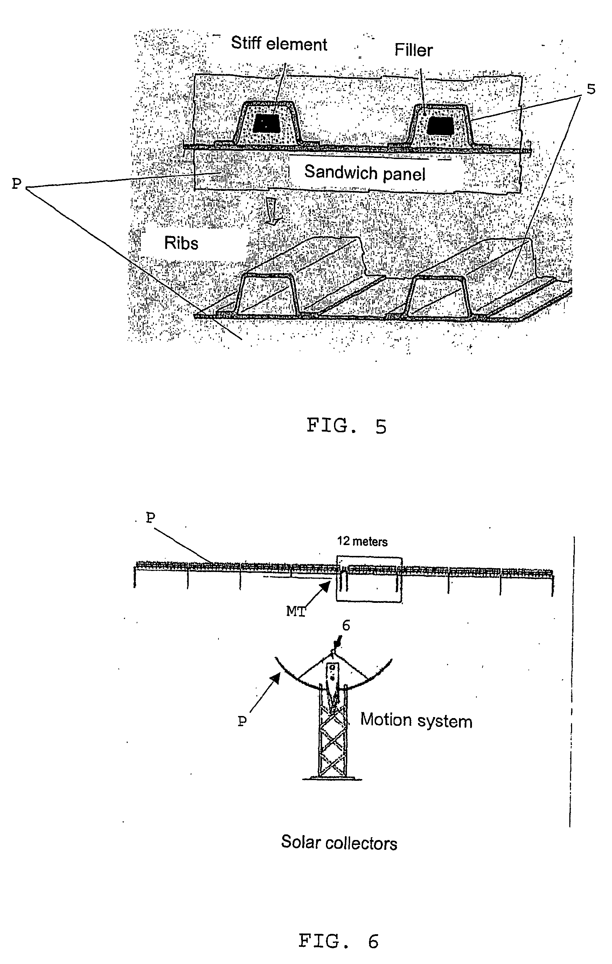

figure 5 represents an example of a rib supporting the honeycomb panels;
figure 6 shows a plant portion with a plurality of panels aligned to form a solar concentrator; and

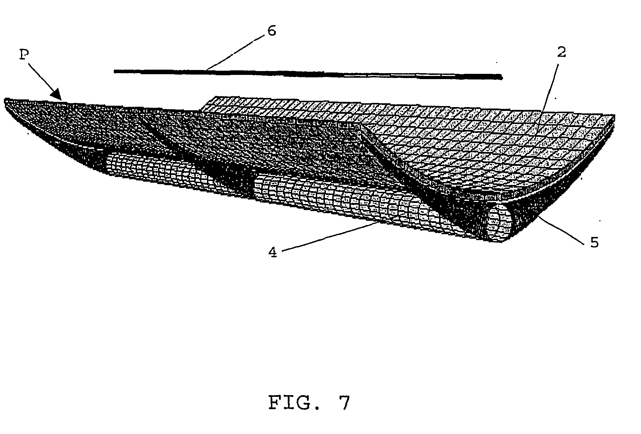

figure 7 shows a perspective view of a honeycomb panel having a constant thickness, in which the support ribs are formed by variable section fins.

As known, the reflecting panels and their support structures play an important role for determining the overall efficiency of solar power plants these equipments should convey the great quantity of energy striking on a receiving tube.

For obtaining this aim, the entire support structure should have low deformation levels caused by winds during working conditions: in fact, in certain conditions said mirrors behave as sails.

The parabolic shape of the panels has a wide surface which could cause distortions due to the flexure and torsion of the entire structure. In any case, for avoiding excessive reductions of the optical efficiency, the deformation due to flexion and torsion moments should be smaller than ± 0,15° (with respect to the normal of the reflecting surface), whereas the induced tensions should not exceed the maximum tensile stresses of the material, particularly of the mirrors. 0,15 degrees corresponds to the value of the maximum deviation of the reflected sun's ray, with respect to an ideal situation, in which there is no deformation of the parable. In any case, the mirrors should be easily replaceable and adjustable in situ.

Referring to the above listed figures, for overcoming the problems characterising the known technique, the present invention provides the use of composite materials having a high stiffness and a low weight, such as honeycomb structures 1, on which there should be supported the thin mirrors 2 having a thickness of about 1,1mm or a slightly greater one.

Such a construction kind may be performed at low costs and with reflecting glass panels 2 having a small thickness, which are cold deformed.

The intrinsic rigidity of the (sandwich) panels allows to use panels having a greater size with respect to the sizes of the mirrors as at present employed. Further economical advantages are potentially possible by reducing materials and necessary support structures.

The sandwich panels P consist of a central layer or core 1 with a honeycomb structure of aluminium, on which two very thin layers (skins) 3 of steel, are fastened, which improve the sturdiness properties and the shape of the entire panel.

The high flexure strengths are assured by two outer skins 3, which are subjected to tensive stresses. The central layer or core 1, formed by small honeycomb cells, should also have a high compression resistance for keeping constant the distance between the skins.

The thermal expansion coefficients of the outer layers (skins) 3 are similar to those of the glass 2, for avoiding ruptures caused by differential elongations of the two materials. As it will be disclosed hereafter, steel resulted to be the most suitable material for this aim, whereas aluminium, owing to its low weight, resulted to be the most suitable material for the core 1.

The thin glass (mirror) 2 is fastened to the skin 3 of the concave surfaces of the panel P.

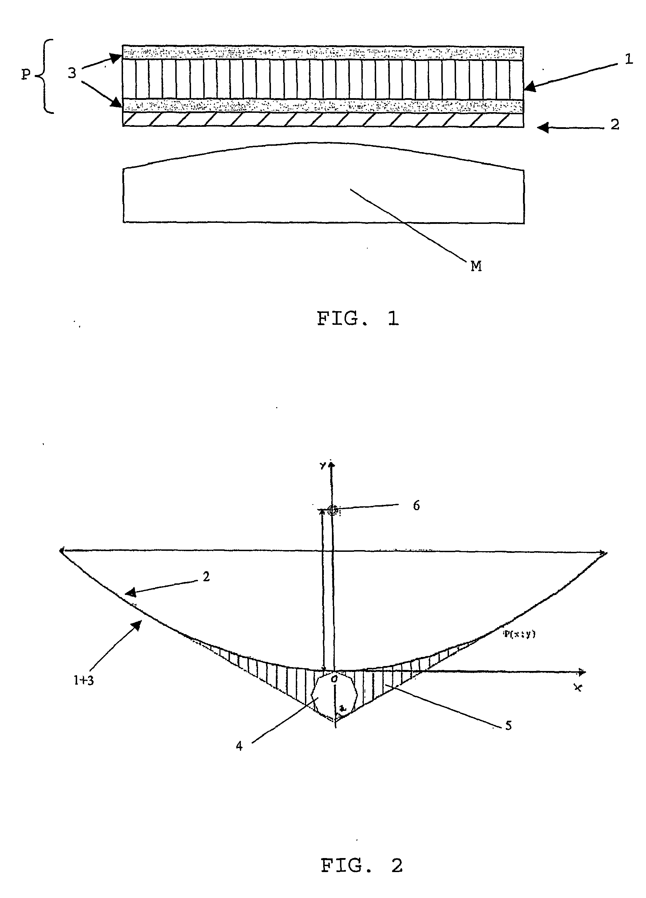

The novel curved honeycomb structure according to the invention (figures 2 to 4 and 7), having reflecting surfaces 2 at the upper concave portion, improves the sturdiness by avoiding dangerous deformations, which would hinder the use of thin and light mirrors (less resistant). This constructive solution, beside to offer conveniently a high sturdiness-weight ratio, reduces also the material and production costs.

The intrinsic sturdiness of the honeycomb structure facilitates the use of panels P having greater sizes, thus causing a further reduction of installation and regulation costs of the mirrors in situ, which in the present existing plants corresponds to the cost of a panel.

Moreover, the complexity of the present support structures is strongly reduced thanks to the fact that these panels P, even if light, are self-supporting.

In the embodiment of Fig. 3, there is shown a panel with honeycomb structure and a varying thickness, which decreases starting from the parable apex towards the longitudinal parable edges.

The above disclosed cylindrical support tube 4 has the function of transmitting to the entire structure the twisting moment of the motor MT, particularly to the reflecting parabolic panels. For simplifying the production process, the tube 4 could be constructed by folding a flat sheet according to a closed polygonal shape, near to a circle, which is welded at its extremities.

In alternative to this configuration, according to the invention a second embodiment is provided (see Fig. 4), comprising curved honeycomb panels with a constant thickness, which are secured to the longitudinal support tube 4 by suitable support fins 5 integral therewith.

Preferably, each panel P has a length of about 3 meters and the aluminium honeycomb layer has a thickness of 25mm and is lined by 0,5mm thick skins of carbon steel.

These carbon steel skins are treated by an economic electro-galvanization process of their surfaces for protecting the material from corrosion and increasing the adhesion force of the mirrors. To said mirrors, by means of an adhesive layer, a waterproof material is applied for avoiding an electro-chemical corrosion which could take place by contact of the silver-plated surfaces with water (an electrolyte).

This is one of the main reasons of corrosion of the silver plated on the glass.

The thin mirror 2 is fastened to the panel by glueing with a epoxidic or acrylic glue and by applying by means of a curved spindle a pressure on the concave support surface. The use of two steel sheets or skins 3 is important for ensuring both the thermal stability and integrity of the mirror and maintaining a good optical characteristic in a wide temperature range. In fact, the thermal expansion coefficient of steel (10,8÷12,6x10⁶ m/m°C) is near to that of glass (5,6÷12,6x10⁶ m/m°C), whereas those of aluminium (21,6x10⁶ m/m°C) and of plastic (50x10⁶ m/m°C) are much higher with respect to glass.

The difference between the expansion coefficients of glass and steel minimizes the stresses caused by temperature changes and optical distortion, whereas the arrangement of the steel skins (and thus of the same material) on both the faces of the honeycomb layer, advantageously minimizes the curvature change. The modulus of elasticity of steel (207.000 Mpa), higher than that of glass (69.000Mpa) ensures the maintenance of the initial curvature of the sandwich element, even if the room temperature changes.

Instead of the steel skins 3, it could be employed skins of a lighter material, such as aluminium, but in such a case it would be advisable to insert a glass fibre layer between the aluminium skin and thin reflecting glass 2, all this for obtaining the different thermal expansions of the materials.

The honeycomb panels P should be supported by a sufficiently rigid structure for avoiding deformation, which could cause a reduction of the optical efficiency of the entire structure. According to a peculiar feature of the invention, an integration between the honeycomb panels and the support structure is provided: this solution simplifies the structure and facilitates its installation, attaining thus an improvement with respect to the conventional solution (thick glass mirrors - rectangular metal structure with hollow tubes).

A simple comparison of costs (per surface unit) between the conventional thick glass mirrors and the above disclosed thin mirrors 2 supported by honeycomb panels P does not allow to wholly emphasize the advantages of the invention, but when considering the cost reductions for the installed collector, whereby the structure and its installation weight in almost equal proportions (receiving tube and motorization included), the advantages are evident.

As it has been already mentioned, the structure supporting each module P, to which the reflecting surfaces 2 are fastened, is formed by a cylinder tube 4, which preferably is provided with reinforcement fins or ribs, which connect it to the panels 4 themselves (see Figs. 4, 5 and 7).

The entire support structure, schematically shown in Fig. 6, consists of a series of modules P of the above said kind. In this example, the modules have a length of 12 meters and a width of about 5,76m. Consequently, with 8, 4 or 2 modules it is possible to have linear parabolic panels with a length of 100, 50 or 25 meters, actuated by a motor MT arranged at the half length, which allows the rotation of the parabolic element for following the displacement of the sun during the day.

The criterion on which the limitation of the entire length of the parabolic element is based, is originated from the need to limit the deformations of the receiving tube caused by the thermal expansions, as well as the torsional deformations caused by the wind action, without utilizing excessively heavy and complete support structures.

The supports at the ends of each module are not secured for allowing the thermal expansions. For minimizing the moment to be supplied by the motor for rotating the panel structure, the rotation axle extends through the centre of gravity of the entire panel. It should be noted that said motor supplies the torque which should overcome the friction forces and possible resistance torque due to the wind. The rotation moment is transmitted from the support tube (hollow) 4 supporting the reflecting structure by means of the above said connection fins 5. The pitch or mutual distance of the fins 5 depends on the geometrical characteristics of the sandwich structure used for supporting the mirrors. In the case of panel with honeycomb core 1 of 2,5cm, the pitch between the fins can reach 3 meters.

For avoiding that the support tube 4 can be subjected to settlement or collapses in correspondence to the support fins, it is provided to insert flanges or structural reinforcement elements, apt to increase the stiffness of the tube itself, which allows the mechanical connection with the fins 5.

The follower system includes a particular solar sensor and is provided with a feedback signal, which assures an exact alignment and concentration of the sun rays onto the receiving tube 6 with a precision of about 0,1°. The follower operation is monitored by a local computer assisted by a hardware unit assigned to this purpose. In the control room there are provided indicators of the working condition, alarms and diagnostics. Obviously, the control range of the alignment of the collector and possible corrections thereof are of particular importance.

The entire structure is preferably designed to operate in normal conditions at wind speeds between 40 and 60 Km/h and at the limit wind condition of 110 Km/h. At the limit velocity of 110 Km/h, the collector will be turned over and arranged to offer a minimum resistance to the wind, forming an angle of 30° with respect to the horizontal position. For estimating the forces exerted by the wind on the glass panels simulation by the FLUENT codex has been used, whereas for estimating the stresses and deformations acting on the materials the CASTEM codex has been used. The FLUENT allows to characterize the pressure profile on the reflecting surface, there being examined also the instability phenomenon caused by the vortexes downstream the reflecting surface, as well as the low frequency oscillations, which cause the vibrations on the mirror surfaces. There have been also performed controls at different inclination angles of the surface with respect to both the reflecting element and support structure.

The first preliminary test has been performed on a parabolic honeycomb panel, on which a uniform pressure of 500 N/m² (80 Km/h) has been exerted. In the specific case, the panel was formed by a core of 2, 5cm and two skins of 0,5mm on the outer surfaces, with the features resulting from the following table

| **HONEYCOMB** | | | | **SKINS** | |
|---|---|---|---|---|---|
| Aluminum | | | | Carbon steel | |
| Density | | | 83 Kg/m³ | Density | 8300 Kg/m³ |
| Cell sizes | | | 6 mm | Young's Modulus | 205 Gpa |
| Compression | | E_{C} | 1000 MPa | Poisson's Ratio | 0.3 |
| | | Stress | 4.6 MPa | Stress | 285 Mpa |
| Plane | L direction | G_{L} | 440 MPa | Thickness | 0.5 mm |
| | | Tension | 2.4 MPa | | |
| | W direction | G_{W} | 220 MPa | Weight | 4.15 Kg/m² |
| | | Tension | 1.5 Mpa | | |

The test has been carried out by supposing that:
- The panel of 12 meters has the same characteristics along its extension: this means that all single panels are connected one with another and form a single module;
- The supports (fins on the lower surface) have a high stiffness;
- The panels have single honeycomb cells and shell shaped elements in the lower and upper wall of the surface layers (skins);
- The surface layers (skins) are formed of an isotrope material and the honeycomb is formed by a nonhomogeneous material.
   It is of interest to note that although from the numerical simulation (performed by supposing respectively 2, 3 and 4 support fins) there resulted in any case stresses lower than the acceptable maximum values, for having allowable deformations it is necessary to use panels with at least 3 fins: the use of four fins seems to be the most suitable choice. However, the number of fins depends on their structural characteristics and on materials used forattaining the necessary stiffness.

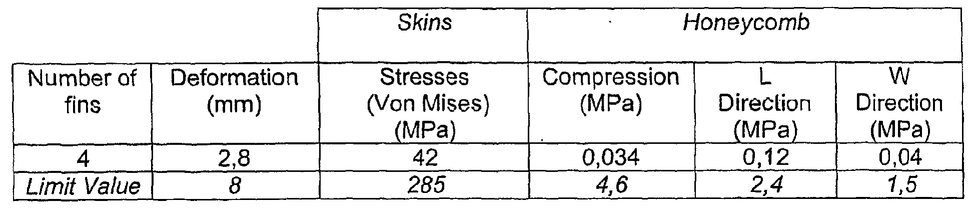

The present invention has been disclosed and shown in some preferred embodiments thereof, but it is obvious that a person skilled in the art could perform some modifications and technically and/or functionally equivalent replacement without going out from the scope of the present invention.

## Claims

1. A module of solar concentrator with bidimensional parabolic profile geometry, which comprises one or more self-supporting stiff panels (P) having a parabolic cross section and rectilinear longitudinal extension, which are apt to support thin reflecting surfaces (2) conjugated thereto, said panels being moved by automated motion means for following the movement of the sun during the day; the geometry of said reflecting surfaces (2) being such as to concentrate the incident sun's rays along a longitudinal axis corresponding to the symmetry axis of a receiving tube (6), within which a fluid to be heated is flowing, wherein said panels (P) have a sandwich structure having: a reflecting surface made of glass, a honeycomb central core (1) of aluminium and two thin outer skins (3) of a high resistance material, **characterized in that** either said outer skins (3) are made of steel or said outer skins (3) are made of aluminium and a further layer of glass fibres being inserted between the concave side of the aluminium skin and thin reflecting mirror (2), such an arrangement obviating the great differences existing between the thermal expansion coefficient of the mirror (2) and that of the aluminium skin (3).

2. A module according to the preceding claim, **characterized in that** the panels (P) are constrained, at their convex face, on longitudinal tubular support element (4), which is provided with means for rotating it around its axis, so as to move the reflecting surfaces (2) for following the motion of the sun.

3. A module according to the preceding claim, **characterized in that** each parabolic panel (P) has a variable thickness, which decreases starting from the parable apex towards the parable longitudinal edges, the panel being fastened to the longitudinal support tube (4) at the central zone having a greater thickness.

4. A module according to claim 2, **characterized in that** each parabolic panel (P) has a constant thickness and is constrained to the longitudinal support tube (4) by means of transverse support fins (5).

5. A module according to any one of the preceding claims, **characterized in that** the panels (P) are about 3 meters long, the panel honeycomb core (1) consists of aluminium, has a thickness of 25mm and is lined by 0,5 mm thick steel skins (3).

6. A module according to any one of the preceding claims, **characterized in that** the mirrors (2) are fastened on the concave surface of the panel (P) by an epoxidic or acrylic glue and pressed by means of a curved spindel (M), the diaphragms or skins of steel assuring both the thermal stability and integrity of the mirror so as to maintain a good optical characteristic within a wide temperature range.

7. A module according to any one of the preceding claims, **characterized in that** it is installed in series for a total length till to 100 meters so that all the aligned parabolic panels (P) are rotated by a single motor (MT) placed at the half length of the support tube (4).

8. A solar plant for the production of energy, **characterized in that** it comprises a plurality of panels according to the previous claims.

## Patentansprüche

1. Modul eines solaren Konzentrators, mit einer zweidimensionalen parabolischen Profilgeometrie, welcher ein oder mehrere selbstragende steife Paneele (P) beinhaltet, welche einen parabolischen Querschnitt und geradlinige longitudinale Ausdehnungen aufweisen, welche geeignet sind damit verbundene dünne reflektierende Oberflächen (2) zu tragen, wobei die Paneele durch eine automatisierte Bewegungseinrichtung bewegt werden, um der Bewegung der Sonne während des Tages zu folgen, wobei die Geometrie der reflektierenden Oberflächen (2) derart ist, dass die einfallenden Sonnenstrahlen entlang einer longitudionalen Achse konzentriert werden, welche der Symmetrieachse der empfangenden Röhre (6) entspricht, innerhalb welcher ein aufzuheizendes Fluid fließt, wobei die Paneele (P) eine Sandwichstruktur aufweisen, welche eine aus Glas gebildete reflektierende Oberfläche, einen wabenförmigen zentralen Kern (1) aus Aluminium und zwei dünne äußere Häute (3) aus einem hochwiderstandfähigen Material aufweist, **dadurch gekennzeichnet, dass** entweder die äußeren Häute (3) aus Stahl gebildet sind oder die äußeren Häute (3) aus Aluminium und einer weiteren Schicht aus Fiberglas gebildet sind, welche zwischen die konkave Seite der Aluminiumhaut und einem reflektierenden Spiegel (2) eingesetzt sind, eine derartige Anordnung widersteht den großen Unterschieden, welche zwischen dem thermischen Ausdehnungskoeffizient des Spiegels (2) und dem der Aluminiumhaut (3) besteht.

2. Modul nach dem vorhergehenden Anspruch, **gekennzeichnet dadurch, dass** die Paneele (P) mit ihrer konvexen Seite an einem longitudionalen röhrenförmigen Trägerelement (4) verbunden sind, welches mit einer Einrichtung zu seiner Drehung um seine Achse versehen ist, damit die reflektierenden Oberflächen (2) bewegt werden, um der Sonnenbewegung zu folgen.

3. Modul nach dem vorhergehenden Anspruch, **gekennzeichnet dadurch, dass** jedes parabolische Paneel (P) eine variable Dicke aufweist, welche beginnend an dem Parabelscheitel zu den longitudionalen Kanten der Parabel hin abnimmt, wobei das Paneel an der longitudionalen Trägeröhre (4) in dem zentralen Bereich befestigt ist, welcher eine größere Dicke aufweist.

4. Modul nach Anspruch 2, **dadurch gekennzeichnet, dass** jedes parabolische Paneel (P) eine konstante Dicke aufweist und auf die longitudionale Trägerröhre (4) mittels querverlaufender Trägerrippen (5) beschränkt ist.

5. Modul nach einem der vorhergehenden Ansprüche, **gekennzeichnet dadurch, dass** die Paneele (P) etwa 3 Meter lang sind, der Paneelwabenkern (1) aus Aluminium besteht, welcher eine Dicke von 25 mm aufweist und mit 0,5 mm dicken Stahlhäuten (3) überzogen ist.

6. Modul nach einem der vorhergehenden Ansprüche, **gekennzeichnet dadurch, dass** die Spiegel (2) an der konkaven Oberfläche des Paneels (P) durch einen Epoxid- oder Acrylkleber befestigt sind und mittels einer gekrümmten Spindel (M) zusammengedrückt werden, wobei die Membrane oder Häute aus Stahl sowohl die thermische Stabilität als auch die Integrität des Spiegels sicherstellen, damit eine gute optische Eigenschaft über einen großen Temperaturbereich aufrechterhalten wird.

7. Modul nach einem der vorhergehenden Ansprüche, **gekennzeichnet dadurch, dass** er in Serie über eine gesamte Länge bis zu 100 Metern installiert wird, so dass alle der ausgerichteten parabolischen Paneele (P) durch einen einzigen Motor (MT) gedreht werden, welcher bei der halben Länge des Trägerrohrs (4) angeordnet ist.

8. Solarzellenanlage zur Energiegewinnung, **dadurch gekennzeichnet, dass** sie eine Mehrzahl von Paneelen gemäß der vorhergehenden Ansprüche beinhaltet.

## Revendications

1. Module de concentrateur solaire ayant une géométrie de profil parabolique bidimensionnelle, qui comporte un ou plusieurs panneaux rigides autoporteurs (P) ayant une coupe transversale parabolique et une extension longitudinale rectiligne, qui sont aptes à supporter des surfaces réfléchissantes minces (2) conjuguées à ceux-ci, lesdits panneaux étant déplacés par des moyens de déplacement automatiques pour suivre le mouvement du soleil durant la journée, la géométrie desdites surfaces réfléchissantes (2) étant de manière à concentrer les rayons de soleil incidents le long d'un axe longitudinal correspondant à l'axe de symétrie d'un tube récepteur (6), à l'intérieur duquel circule un fluide à chauffer, dans lequel lesdits panneaux (P) ont une structure sandwich ayant une surface réfléchissante constituée de verre, un noyau central en nid-d'abeilles (1) constitué d'aluminium et deux pellicules extérieures minces (3) constituées d'un matériau de résistance élevée, **caractérisé en ce que** lesdites pellicules extérieures (3) sont constituées d'acier ou lesdites pellicules extérieures (3) sont constituées d'aluminium et une autre couche de fibre de verre étant insérée entre le côté concave de la pellicule d'aluminium et un miroir réfléchissant mince (2), un tel agencement évitant les grandes différences existant entre le coefficient d'expansion thermique du miroir (2) et celui de la pellicule d'aluminium (3).

2. Module selon la revendication précédente, **caractérisé en ce que** les panneaux (P) sont serrés, au niveau de leur face convexe, sur un élément de support tubulaire longitudinal (4), qui est muni de moyens pour le pivoter autour de son axe, de manière à déplacer les surfaces réfléchissantes (2) pour suivre le mouvement du soleil.

3. Module selon la revendication précédente, **caractérisé en ce que** chaque panneau parabolique (P) a une épaisseur variable, qui décroît en commençant par le sommet de parabole vers les bords longitudinaux de parabole, le panneau étant fixé sur le tube de support longitudinal (4) au niveau de la zone centrale ayant une plus grande épaisseur.

4. Module selon la revendication 2, **caractérisé en ce que** chaque panneau parabolique (P) a une épaisseur constante et est serré sur le tube de support longitudinal (4) par l'intermédiaire d'ailettes de support transversales (5).

5. Module selon l'une quelconque des revendications précédentes, **caractérisé en ce que** les panneaux (P) ont une longueur d'environ 3 mètres, le noyau en nid-d'abeilles de panneau (1) est constitué d'aluminium, a une épaisseur de 25 mm et est recouvert de pellicules d'acier (3) de 0,5 mm d'épaisseur.

6. Module selon l'une quelconque des revendications précédentes, **caractérisé en ce que** les miroirs (2) sont fixés sur la surface concave du panneau (P) par une colle époxydique ou acrylique et comprimés par l'intermédiaire d'une broche incurvée (M), les diaphragmes ou pellicules d'acier assurant à la fois la stabilité thermique et l'intégrité du miroir de manière à maintenir une bonne caractéristique optique dans une large plage de température.

7. Module selon l'une quelconque des revendications précédentes, **caractérisé en ce qu'**il est installé en série sur une longueur totale allant jusqu'à 100 mètres de sorte que tous les panneaux paraboliques alignés (P) sont entraînés en rotation par un seul moteur (MT) placé à mi-longueur du tube de support (4).

8. Installation solaire pour la production d'énergie, **caractérisée en ce qu'**elle comporte une pluralité de panneaux selon les revendications précédentes.
